# EUROPEAN PATENT APPLICATION

(11) **EP 4 730 854 A1**
(43) Date of publication of application: **22.04.2026**
(21) Application number: 25208808.3
(22) Date of filing: 15.10.2025
(51) Int. Cl.: H04W 16/18, H04W 24/02

(54) **CONNECTION QUALITY OPTIMIZATION FOR MOBILE NETWORKS**

(30) Priority: 17.10.2024 US 202418919383
(71) Applicant: Nokia Solutions and Networks Oy, 02610 Espoo (FI)
(72) Inventor: WIACEK, Fabian, Warsaw (PL)
(74) Representative: Bryers Intellectual Property Ltd

(57) **Abstract**

Apparatus and method of optimizing radio or wireless connectivity for user equipment (UE). In an embodiment, the apparatus identifies a geographic region of interest served by a radio access network (RAN), provisions an estimated connectivity map of the geographic region indicating estimated connection quality values at different locations of the geographic region, determines one or more areas on the estimated connectivity map having insufficient connection quality based on the estimated connection quality values, and provides a recommendation for the UE to avoid service interruptions due to the one or more areas having insufficient connection quality.

## Description

### Technical Field

This disclosure is related to the field of communication systems, and more particularly, to mobile networks.

### Background

Subscribers to mobile networks, such as Long-Term Evolution (LTE), Fifth Generation (5G), Sixth Generation (6G), etc., are able to access services through User Equipment (UE). A radio access portion (i.e., Radio Access Network (RAN)) of the mobile network provides radio or wireless connectivity to a UE, and connects the UE to a core network. Connection availability may be assessed by marketing purpose connection coverage maps but connection quality available to a UE may in fact depend on many factors, such as cell coverage, signal power, modulation, connection techniques, radio resource utilization, bandwidth, obstacles, interferences, weather, propagation conditions, etc., where these and other factors may be related to actual UE position or location and actual time. In practice, this means that the provision of a connectivity service may be affected by inequalities in connection quality, which in turn may have an impact on the quality of service provided, user experience, etc.

### Summary

Described herein are an enhanced system and associated method of optimizing radio or wireless connectivity for user equipment (UE). As an overview, connection quality available to a UE may vary depending on the location or position of the UE in a geographic region. A UE may be a host for variety of services and applications, which may require at least a minimal level of connection quality to satisfy mission objectives, user experience, etc. Thus, an apparatus as described herein estimates connection quality values at different locations of the geographic region in creating or updating a connectivity map of the geographic region to reflect actual connectivity values. The apparatus may then provide instructions or recommendations regarding the UE based on the connectivity map, such as adjusting a route plan through the geographic region to avoid areas of insufficient connection quality, changing a location in the geographic region from a location of insufficient connection quality to a location of sufficient connection quality, performing data buffering of non-real-time data at the UE when at a location of sufficient connection quality, etc. One technical benefit is inequalities in connection quality across the geographic region can be compensated with minimal impact on mission objectives, user experience, etc.

In an embodiment (also referred to as an aspect), an apparatus comprises at least one processor and at least one memory storing instructions that, when executed by the at least one processor, cause the apparatus at least to perform identifying a geographic region of interest served by a radio access network, provisioning an estimated connectivity map of the geographic region indicating estimated connection quality values at different locations of the geographic region, determining one or more areas on the estimated connectivity map having insufficient connection quality based on the estimated connection quality values, and providing a recommendation for user equipment to avoid service interruptions due to the one or more areas having insufficient connection quality.

In an embodiment, a method comprises identifying a geographic region of interest served by a radio access network, provisioning an estimated connectivity map of the geographic region indicating estimated connection quality values at different locations of the geographic region, determining one or more areas on the estimated connectivity map having insufficient connection quality based on the estimated connection quality values, and providing a recommendation for user equipment to avoid service interruptions due to the one or more areas having insufficient connection quality.

Other embodiments may include computer readable media, other systems, or other methods as described below.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 illustrates a deployment of a Radio Access Network (RAN) in a geographic region in an illustrative embodiment.
FIG. 2 illustrates routes of a UE in a geographic region in an illustrative embodiment.
FIG. 3 illustrates connection quality over the routes in an illustrative embodiment.
FIG. 4 is a block diagram illustrating a connectivity manager in an illustrative embodiment.
FIG. 5 is a block diagram of a UE in an illustrative embodiment.
FIG. 6 illustrates wireless connectivity optimization for different use cases in an illustrative embodiment.
FIG. 7 is a flow chart illustrating a method of performing wireless connectivity optimization in an illustrative embodiment.
FIG. 8 illustrates a connectivity map of a geographic region in an illustrative embodiment.
FIG. 9 illustrates a connectivity map of a geographic region in another illustrative embodiment.
FIGS. 10A-10B are flow charts illustrating a method of performing a connectivity map update procedure in an illustrative embodiment.
FIG. 11 is a schematic diagram illustrating operations of a connectivity manager in an illustrative embodiment.
FIG. 12 illustrates a connectivity map of a geographic region in an illustrative embodiment.
FIG. 13 illustrates a connectivity numerical map in an illustrative embodiment.
FIG. 14 is a schematic diagram of implementing an ML system in an illustrative embodiment.
FIG. 15 is a flow chart illustrating a method of performing a connectivity-based route optimization procedure in an illustrative embodiment.
FIG. 16 illustrates a route plan of the UE in an illustrative embodiment.
FIG. 17 is a flow chart illustrating a method of adjusting a route plan in an illustrative embodiment.
FIG. 18 illustrates a route plan divided into route segments in an illustrative embodiment.
FIG. 19A illustrates an adjusted route plan in an illustrative embodiment.
FIG. 19B illustrates connection quality over the adjusted route plan in an illustrative embodiment.
FIG. 20 illustrates a change in location of a UE in an illustrative embodiment.
FIG. 21 is a flow chart illustrating a method of recommending data buffering in an illustrative embodiment.
FIG. 22 illustrates a route plan of a UE in an illustrative embodiment.
FIG. 23 is a flow chart illustrating a method of performing a connectivity-based route reconfiguration procedure in an illustrative embodiment.
FIG. 24 illustrates a connectivity map of a geographic region in an illustrative embodiment.
FIG. 25 illustrates a reconfigured route plan in an illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

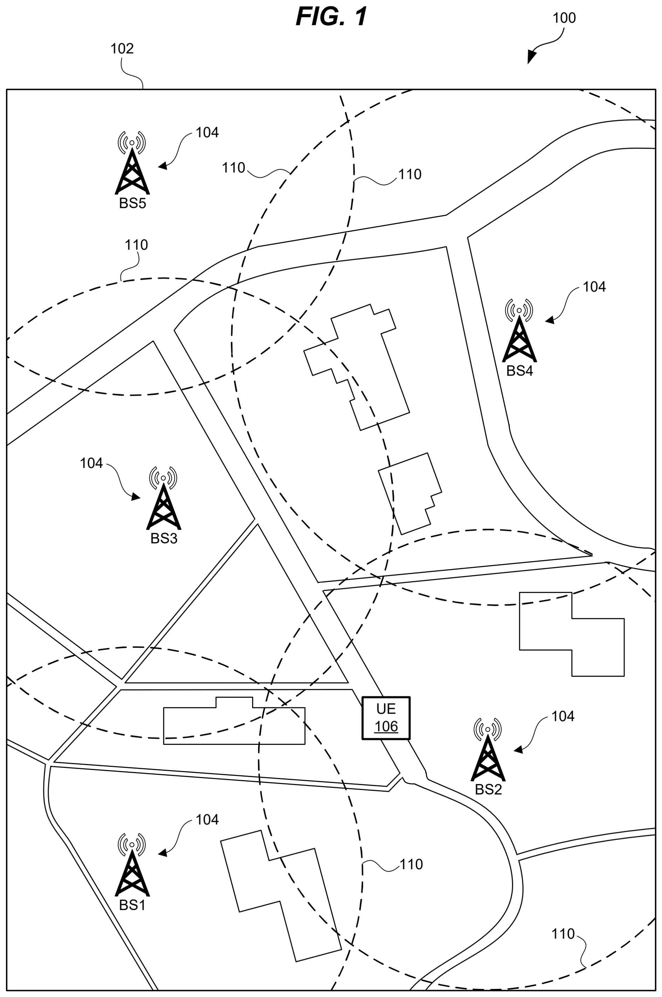

FIG. 1 illustrates a deployment of a Radio Access Network (RAN) 100 in a geographic region 102 in an illustrative embodiment. RAN 100 is part of a cellular or mobile network configured to provide service to mobile terminals or end user devices (e.g., mobile phone (e.g., smartphone), tablet, computer with a mobile broadband adapter, etc.), which are referred to generally herein as User Equipment (UE) 106. RAN 100 provides radio or wireless connectivity to UEs, and connects the UEs to a core network (not shown). The mobile network may comprise an LTE network, a 5G network, a 6G network, or beyond.

RAN 100 includes a plurality of RAN nodes 104 (e.g., base stations B1-B5) deployed at locations within the geographic region 102. Each RAN node 104 provides radio service in a geographic area referred to as a cell 110. UEs located within the cell 110 of a RAN node 104 are able to communicate with the RAN node 104 over an air or radio interface. A RAN node 104 may comprise a gNodeB (gNB) that supports 5G New Radio (NR) access, an eNodeB (eNB) or ng-eNodeB (ng-eNB) that supports Evolved-UMTS Terrestrial Radio Access Network (E-UTRAN) access, or a node that provides another type of wireless access.

Connection quality of a mobile network may depend on many factors, such as cell coverage, signal power, modulation, bandwidth, obstacles, weather, propagation conditions, etc. These factors may be related to actual UE position or location and actual time. Thus, the connectivity service may be affected by inequalities in connection quality, which in turn may have an impact on the quality of the provided service, user experience, etc.

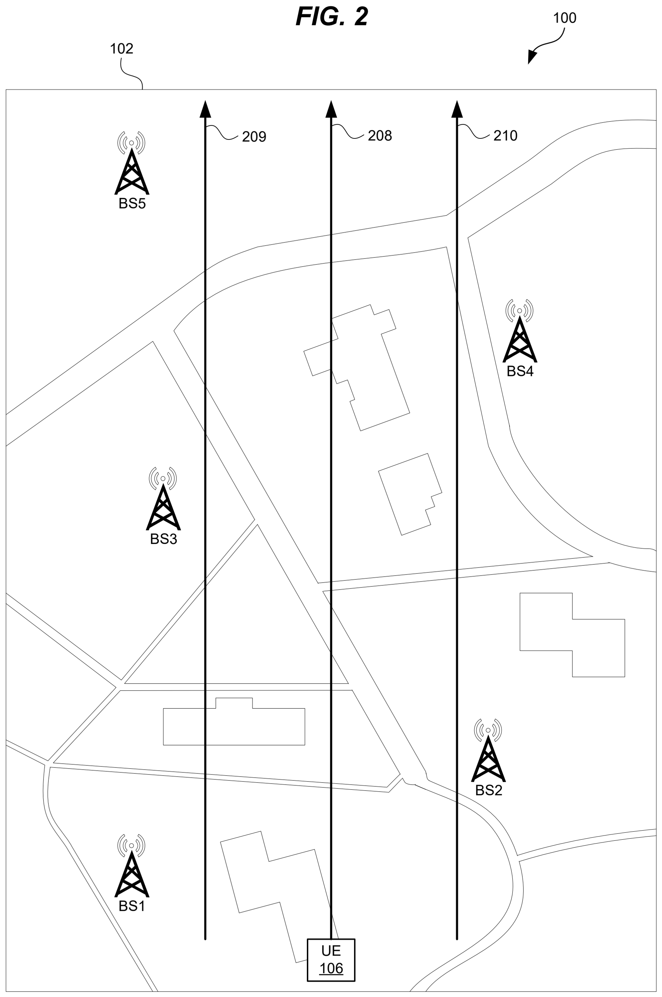

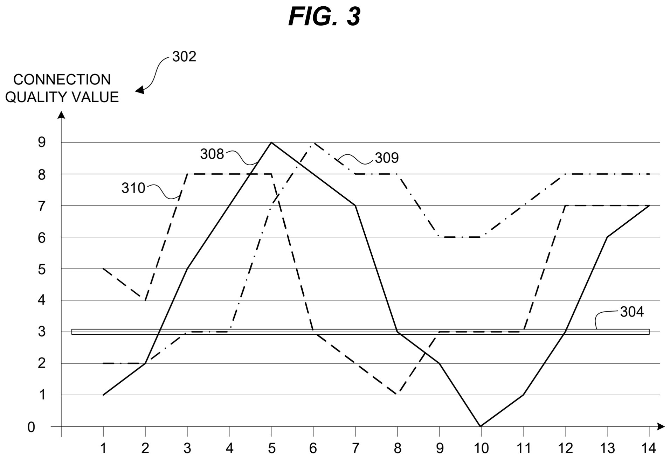

FIG. 2 illustrates routes of a UE 106 in a geographic region 102 in an illustrative embodiment. As illustrated in FIG. 2, a UE 106 that is mobile may take different routes (also referred to as paths, courses, or movements) through geographic region 102. FIG. 3 illustrates connection quality over the routes in an illustrative embodiment. The vertical axis in FIG. 3 indicates a connection quality value 302 (e.g., 0-9), while the horizontal axis is some unit of length (e.g., meters, tens of meters, hundreds of meters, kilometers, etc.). Line 308 indicates the connection quality values 302 along route 208 in FIG. 2, line 309 indicates the connection quality values 302 along route 209 in FIG. 2, and line 310 indicates the connection quality values 302 along route 210 in FIG. 2. As UE 106 traverses any of routes 208-210, the connection quality values 302 may drop below a minimum connection quality threshold 304 (see, for example, a value of "3" in FIG. 3) at one or more points along the route.

Further, a UE 106 at a generally static location or position in geographic region 102 may have a connection quality value 302 below a minimum connection quality threshold 304. This may make particular services (e.g., low latency services) inaccessible or performance of the services may be below user expectations.

In embodiments described herein, inequalities in connection quality may be predicted or detected within portions or areas of a geographic region 102, and actions may be taken to avoid service interruptions due to the inequalities. Processes or procedures performed to address inequalities in connection quality may be referred to as wireless connectivity optimization. An apparatus referred to as a connectivity manager is configured to perform wireless connectivity optimization. A connectivity manager may be implemented in various elements. For example, a connectivity manager may be implemented in a RAN node 104 or other elements of a RAN (e.g., edge-computing), a UE 106, a network function of a core network, a device or system communicatively coupled to a UE 106, etc.

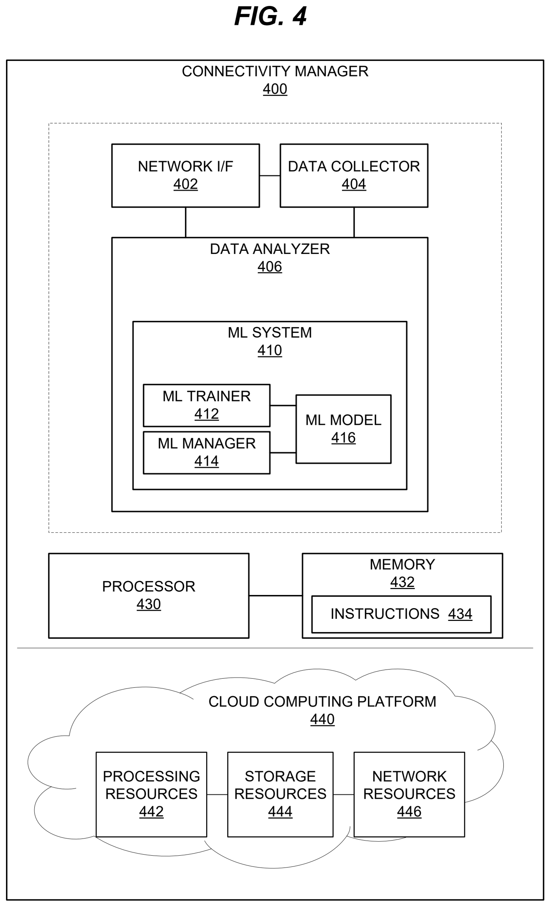

FIG. 4 is a block diagram illustrating a connectivity manager 400 in an illustrative embodiment. Connectivity manager 400 is a data processing element, system, apparatus, application, means, etc., configured to identify inequalities in connection quality at positions or locations within a RAN 100. In this embodiment, connectivity manager 400 includes the following subsystems: a network interface (I/F) component 402, a data collector 404, and a data analyzer 406. Network interface component 402 is a hardware component or circuitry that exchanges messages, packets, data, etc., with other elements over a network connection. Network interface component 402 may use a variety of protocols, Application Programming Interfaces (APIs), etc., for communication. Data collector 404 comprises circuitry, logic, hardware, means, etc., configured to collect data regarding radio/wireless connectivity within a RAN. Data analyzer 406 comprises circuitry, logic, hardware, means, etc., configured to analyze, examine, or monitor data regarding radio/wireless connectivity within a RAN. Example operations of data collector 404 and data analyzer 406 are described in further detail below.

In an embodiment, data analyzer 406 may implement one or more Artificial Intelligence (AI) or Machine Learning (ML) systems. As illustrated in FIG. 4, data analyzer 406 may implement an ML system 410 for analyzing data. An ML system 410 may comprise circuitry, logic, hardware, software, means, etc., configured to use machine learning techniques to perform functions described for data analyzer 406. In an embodiment, one or more ML models 416 are trained for ML system 410. In general, an ML model 416 is a program or algorithm that learns from training samples to make predictions or recommendations based on a set of input data, and/or perform other functions. ML system 410 may further include an ML trainer 412 and an ML manager 414. ML trainer 412 may comprise circuitry, logic, hardware, means, etc., configured to train and/or re-train one or more ML models. ML manager 414 may comprise circuitry, logic, hardware, means, etc., configured to manage one or more ML models 416 as trained. For example, ML manager 414 may be configured to input data into ML model 416 during testing or after deployment, and receive output from the ML model 416, along with other functions.

One or more of the subsystems of connectivity manager 400 may be implemented on a hardware platform comprised of analog and/or digital circuitry. One or more of the subsystems of connectivity manager 400 may be implemented on a processor 430 that executes instructions 434 stored in memory 432. A processor 430 comprises an integrated hardware circuit configured to execute instructions 434 to provide the functions of connectivity manager 400. Processor 430 may comprise a set of one or more processors or may comprise a multi-processor core, depending on the particular implementation. Memory 432 is a non-transitory computer readable medium for data, instructions, applications, etc., and is accessible by processor 430. Memory 432 is a hardware storage device capable of storing information on a temporary basis and/or a permanent basis. Memory 432 may comprise a random-access memory, or any other volatile or non-volatile storage device.

One or more of the subsystems of connectivity manager 400 may be implemented on cloud computing platform 440 (e.g., Amazon Web Services (AWS)) or another type of processing platform. Cloud resources may be provisioned on cloud computing platform 440, such as processing resources 442 (e.g., physical or hardware processors, a server, a virtual server or virtual machine (VM), a virtual central processing unit (vCPU), etc.), storage resources 444 (e.g., physical or hardware storage, virtual storage, etc.), and/or networking resources 446, although other resources are considered herein. Connectivity manager 400 may be built upon the provisioned resources with instructions, programming, code, etc.

Connectivity manager 400 may include various other components not specifically illustrated in FIG. 4.

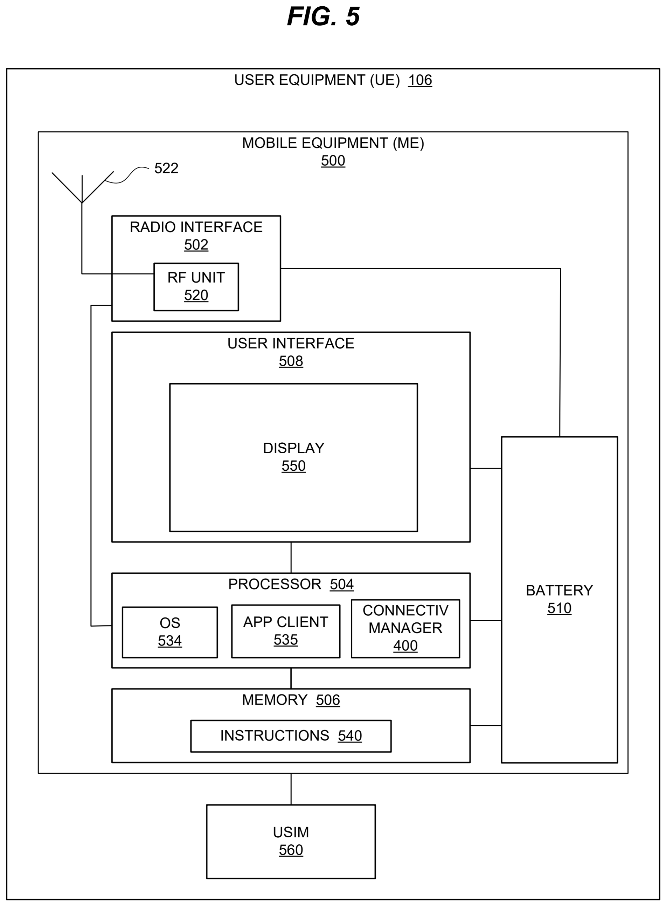

FIG. 5 is a block diagram of a UE 106 in an illustrative embodiment. From a functional standpoint, the UE 106 is composed of at least two parts: Mobile Equipment (ME) 500 and a Universal Subscriber Identity Module (USIM) 560. ME 500 comprises a radio interface component 502, one or more processors 504, and a memory 506. The UE 106 may also comprise a battery 510. Radio interface component 502 is a hardware component or means that represents the local radio resources of the UE 106, such as a Radio Frequency (RF) unit 520 (e.g., one or more radio transceivers) and one or more antennas 522. Radio interface component 502 may be configured for 5G New Radio (NR), LTE, WiFi, Bluetooth, etc. Processor 504 represents the internal circuitry, logic, hardware, means, etc., that provides the functions of the UE 106. Processor 504 may be configured to execute instructions 540 for software that are loaded into memory 506. Processor 504 may execute an Operating System (OS) 534 for the UE 106 that manages hardware and software resources, and one or more application clients 535 for an application. Processor 504 may also execute a connectivity manager 400. ME 500 may further comprise a user interface component 508, which is a hardware component for interacting with an end user. For example, user interface component 508 may comprise a display 550, screen, touch screen, and/or the like (e.g., a Liquid Crystal Display (LCD), a Light Emitting Diode (LED) display, etc.). User interface component 508 may include a keyboard or keypad, a tracking device (e.g., a trackball or trackpad), a speaker, a microphone, etc.

USIM 560 is an integrated circuit that provides security and integrity functions for the UE 106. USIM 560 includes or is provisioned with a subscription profile associated with a subscription of a subscriber. A subscription profile may include a variety of information, such as subscription credentials (e.g., Subscription Permanent Identifier (SUPI)) used to uniquely identify a subscription and to mutually authenticate the UE 106 and a network.

The UE 106 may comprise various other components not specifically illustrated in FIG. 5.

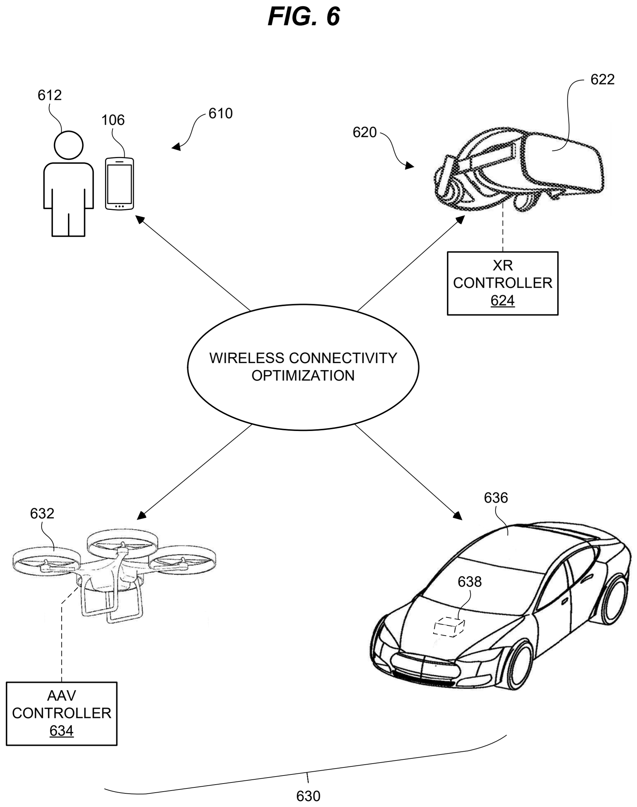

Wireless connectivity optimization may be considered in the context of different use cases. FIG. 6 illustrates wireless connectivity optimization for different use cases in an illustrative embodiment. A general use case is human communication 610 where a human user 612 accesses services of a mobile network through a UE 106 (e.g., smartphone), such as to make voice calls, access data services (e.g., streaming services), etc. Another use case may be enhanced human communication 620 where an immersive experience is provided by a human user through a UE 106. Technologies that provide an immersive experience include eXtended Reality (XR), augmented reality (AR), virtual reality (VR), mixed reality (MR), etc. For example, an immersive experience may be provided through an XR device 622 (e.g., headset) or the like worn by a human user, and an associated XR controller 624 (internal or external). One or both of the XR device 622 and the XR controller 624 may comprise a UE 106 as described herein. Another use case may be enhanced machine communications 630 where machines are controlled via wireless communications over a mobile network. For example, a machine may comprise an Autonomous Aerial Vehicle (AAV) 632 or the like having an associated AAV controller 634 (it is noted that an AAV may also be referred to as an Unmanned Aerial Vehicle (UAV), a drone, etc.). A machine may comprise a self-driving or autonomous vehicle 636 having an associated vehicle controller 638. These and other types of machines may comprise a UE 106 as described herein. Although some examples are provided in FIG. 6, other use cases and devices are considered herein.

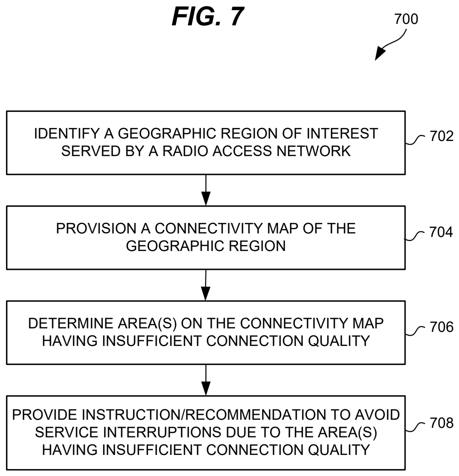

FIG. 7 is a flow chart illustrating a method 700 of performing wireless connectivity optimization in an illustrative embodiment. The steps of method 700 will be described with reference to connectivity manager 400 in FIG. 4, but those skilled in the art will appreciate that method 700 may be performed in other systems or devices. Also, the steps of the flow charts described herein are not all inclusive and may include other steps not shown, and the steps may be performed in an alternative order.

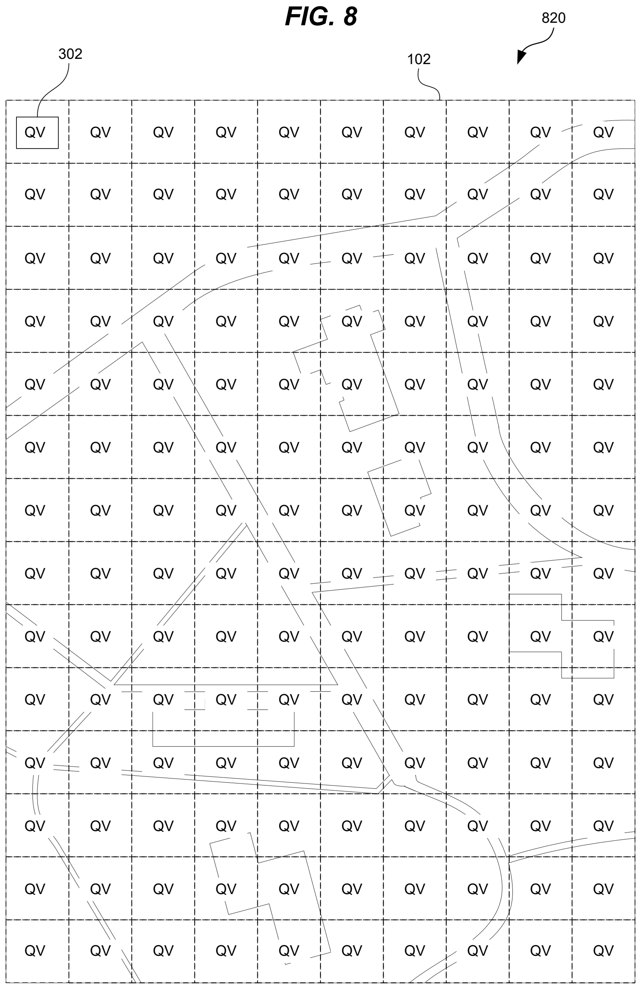

For method 700, connectivity manager 400 identifies a geographic region 102 of interest that is served by a RAN 100 (step 702). For example, connectivity manager 400 may identify a geographic region 102 where a UE 106 is located or expected/predicted to be located. Connectivity manager 400 provisions a connectivity map of the geographic region 102 (step 704). FIG. 8 illustrates a connectivity map 820 of a geographic region 102 in an illustrative embodiment. Connectivity map 820 indicates estimated or predicted connection quality values 302 (QV) at different locations of the geographic region 102, and may also be referred to as a first connectivity map, an estimated/predicted connectivity map, etc. Connection quality values are quantities assigned to geographic locations indicating the quality of a wireless connection to UE 106. Connection quality may be defined by bitrate, throughput, or some other metric. A wireless provider may generate a marketing-style coverage map for potential customers, but these coverage maps are static and typically based on line-of-sight coverage and power budget estimation. Connectivity maps 820 as disclosed herein differs from these coverage maps as these coverage maps do not provide information about connection quality values. For example, cell signal can be very high but cell bandwidth may be too low to satisfy the given UE needs for connection quality. Also, other UEs in the vicinity can drain cell resources and by doing so limit connection quality for a UE. Additionally, weather may reduce connection quality. These factors are not considered in case of marketing-based coverage maps.

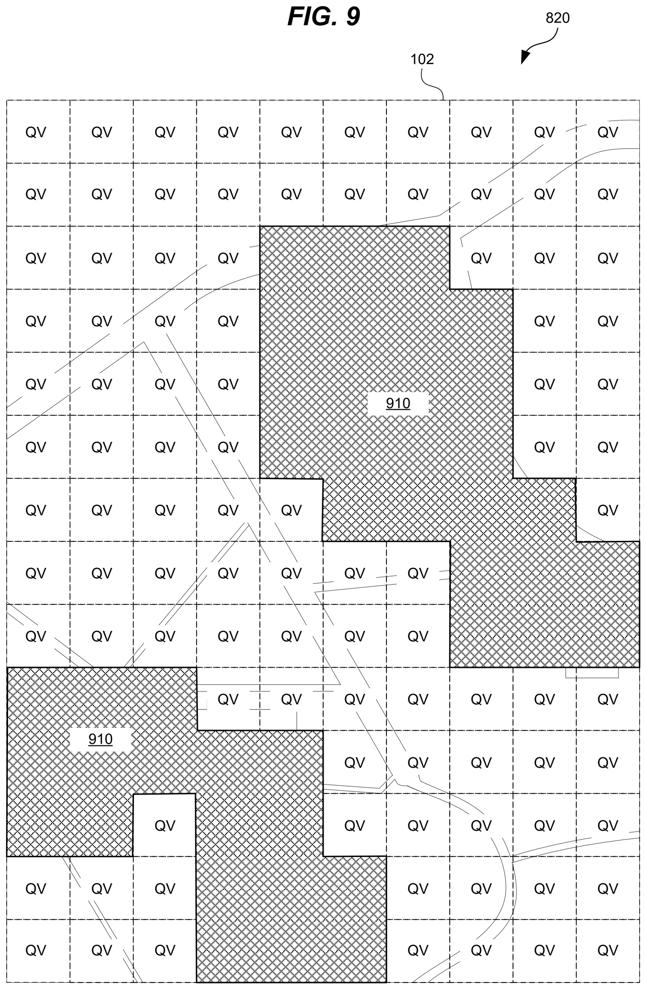

Connectivity manager 400 determines one or more areas on the connectivity map 820 having deficient or insufficient connection quality based on the connection quality values 302 (step 706 of FIG. 7). Insufficient connection quality is defined as a connection quality below a (e.g., predetermined) minimum connection quality threshold 304. FIG. 9 illustrates a connectivity map 820 of a geographic region 102 in another illustrative embodiment. Areas 910 on the connectivity map 820 having insufficient connection quality are indicated by hashing. Connectivity manager 400 may then provide instructions or recommendations for a UE 106 to avoid service interruptions due to the areas 910 having insufficient connection quality (step 708 of FIG. 7). For example, connectivity manager 400 may provide instructions or recommendations to a UE 106, to a user through a UE 106 or another device, to an apparatus carrying, transporting, or otherwise holding a UE 106 (e.g., an AAV 632, autonomous vehicle 636, etc.). One technical benefit is areas of poor connection quality can be avoided by a UE 106, which means that mission objectives, user experience, etc., can be satisfied or at least improved.

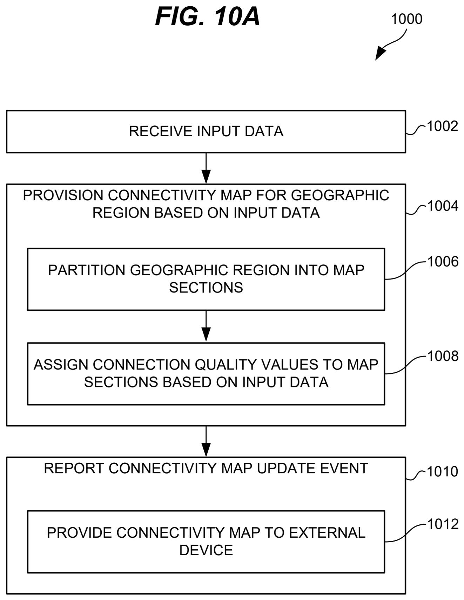

To provision a connectivity map 820 as described above (see step 704 of FIG. 7), connectivity manager 400 may perform a connectivity map update procedure. FIGS. 10A-10B are flow charts illustrating a method 1000 of performing a connectivity map update procedure in an illustrative embodiment. The steps of method 1000 will be described with reference to connectivity manager 400 in FIG. 4, but those skilled in the art will appreciate that method 1000 may be performed in other systems or devices.

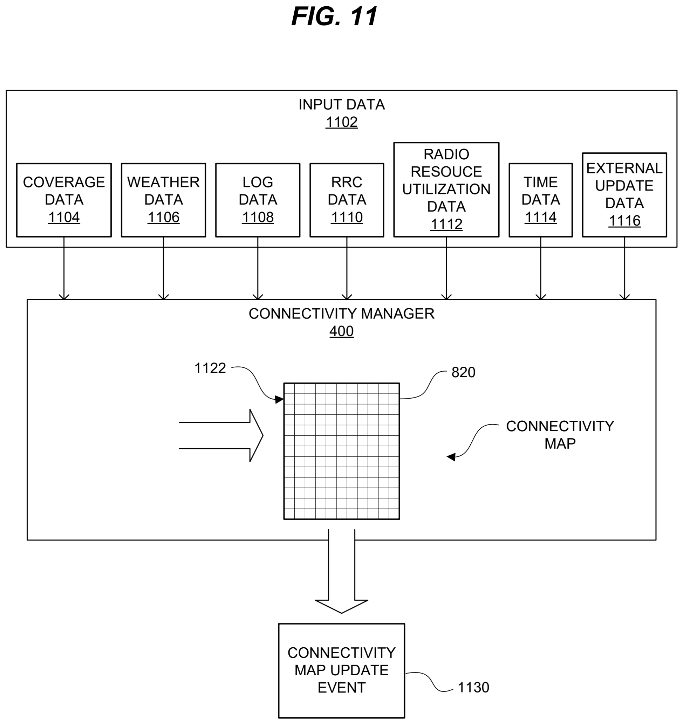

In FIG. 10A, data collector 404 of connectivity manager 400 receives, retrieves, or obtains input data regarding wireless connectivity within the geographic region 102 (step 1002), such as through network interface component 402. FIG. 11 is a schematic diagram illustrating operations of connectivity manager 400 in an illustrative embodiment. Connectivity manager 400 ingests input data 1102 regarding wireless connectivity within a geographic region 102. It is assumed that the geographic region 102 includes one or more RAN nodes 104 configured for wireless communication. The input data 1102 may take on various forms as desired.

In an embodiment, the input data 1102 may comprise coverage data 1104 for one or more cells 110, such as in the geographic region 102. The coverage data 1104 of a cell 110 indicates the coverage area or range of the cell 110. The input data 1102 may comprise weather forecast data 1106, such as for the geographic region 102. The weather forecast data 1106 may give insights about a potential impact of weather conditions on connection quality. The input data 1102 may comprise log data 1108 regarding the wireless connectivity in the geographic region. Log data 1108 is generated by various network elements and devices to gain insights into network behavior, performance, and user experience. The log data 1108 may include UE logs that provide information related to signal power, signal quality, connection establishment, connection techniques, mobility, etc. The log data 1108 may include RAN logs that provide information related to signal power, signal quality, radio resource management, handovers, beamforming, etc. The log data 1108 may include core network logs that provide information related to network signaling, session establishment, network slicing, service delivery, etc. There may be different types of logs embodied in the log data 1108. The log data 1108 may include event logs that capture specific events (e.g., handovers, attach/detach procedures, etc.). The log data 1108 may include counters and statistics that capture aggregated metrics, such as throughput, latency, etc. The log data 1108 may include trace logs. UEs 106 are consistently communicating with the RAN node(s) 104 through network signaling to ensure service continuity, such as while moving. Mobile Network Operators (MNO) may activate trace data collection, and the trace logs record the network signaling messages, such as a sequence of messages exchanged during specific procedures (e.g., RRC connection setup). The log data 1108 may give insights about measured and/or reported connection quality values from previous or other UE operations within the geographic region 102 and/or within a given coverage area of a cell 110. The log data 1108 may be timestamped, and may contain positioning data.

The input data 1102 may include Radio Resource Control (RRC) signaling data 1110, such as for a cell(s) 110 in the geographic region 102. RRC signaling is between a RAN node 104 (e.g., gNB) and a UE 106. The input data 1102 may include radio resource utilization data 1112, such as for the geographic region 102. The radio resource utilization data 1112 may indicate a general level of radio resource usage in a given technology (e.g., Frequency Division Duplex (FDD) where communication is divided based on frequency, Time Division Duplex (TDD) where communication is divided based on time, etc.), which may provide insights about the ability to assign new radio resources for handling new connections from UEs 106. The amount of radio resources scheduled for downlink (DL) and uplink (UL) may be configurable, and depends on cell bandwidth, beam configuration, and techniques used, which may also have an impact on potentially-available radio resources. The input data 1102 may include time reference data 1114. The time reference data 1114 may be used for timestamping. The input data 1102 may comprise external update data 1116. The external update data 1116 indicates one or more connectivity maps 820 or associated reports generated by external systems or logic. Connectivity manager 400 may ingest other types of input data 1102 as desired.

In FIG. 10A, data analyzer 406 of connectivity manager 400 provisions or assembles a connectivity map 820 of the geographic region 102 based on the input data 1102 (step 1004). As illustrated in FIG. 11, connectivity manager 400 generates or updates a connectivity map 820 based on the input data 1102. Although illustrated as two-dimensional 2D (X, Y) in FIG. 11, the connectivity map 820 may be three-dimensional 3D (X, Y, Z) in other examples. In provisioning the connectivity map 820, data analyzer 406 partitions or subdivides the geographic region 102 into map sections 1122 (step 1006 of FIG. 10A). The map sections 1122 represent different locations of the geographic region 102. The size of the map sections 1122 may be uniform or have uniform dimensions across the connectivity map 820, or may have different dimensions. The size of the map sections 1122 may depend on the wireless standard/technology (e.g., LTE vs. 5G) used within the geographic region 102. For example, wireless standards may have different Timing Advance (TA) between the UE and a cell, some wireless standards may implement beamforming, etc. For LTE, for example, dimensions of a map section 1122 may be about 75 meters x 75 meters while dimensions of a map section 1122 may be about 3.5 meters x 2.5 meters for 5G.

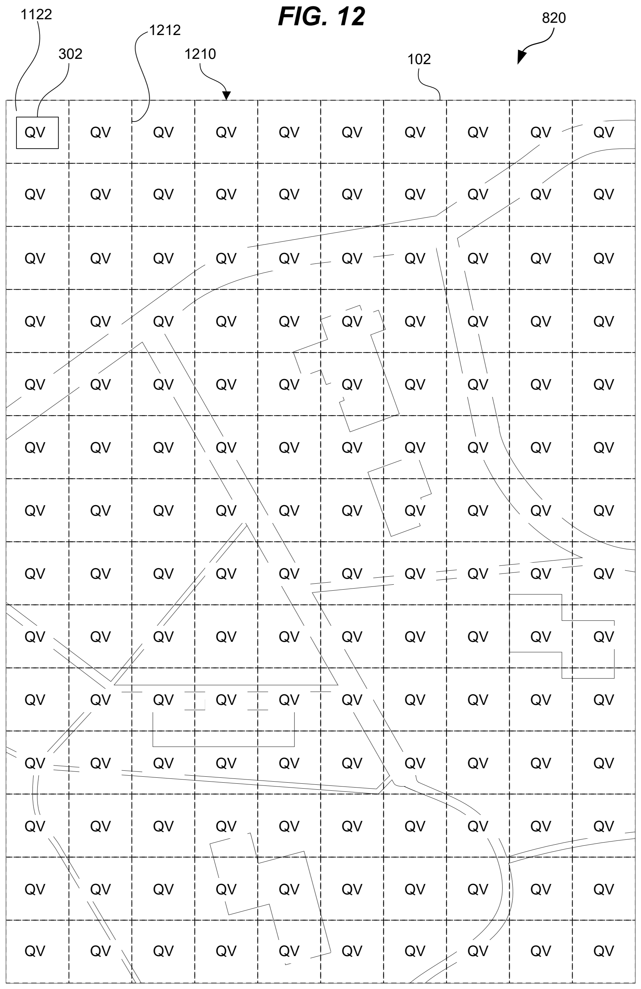

FIG. 12 illustrates a connectivity map 820 of a geographic region 102 in an illustrative embodiment. In an embodiment, the connectivity map 820 is in a grid layout or grid format 1210. For example, data analyzer 406 may overlay a grid 1212 on the geographic region 102 to create the connectivity map 820. This partitions or subdivides the geographic region 102 into a plurality of map sections 1122 (also referred to as grid elements).

In FIG. 10A, data analyzer 406 assigns a connection quality value 302 (QV) to each of the map sections 1122 based on the input data 1102 (step 1008). The connection quality value 302 indicates a wireless connection quality of a UE 106 when located in a map section 1122. In FIG. 11, for example, data analyzer 406 may process the input data 1102 to assign a connection quality value 302 to each of the map sections 1122.

Data analyzer 406 may then report a connectivity map update event based on the connectivity map 820 (step 1010 of FIG. 10A). As illustrated in FIG. 11, connectivity manager 400 may report a connectivity map update event 1130, such as to an external process or logic, to a UE 106, etc., indicating that an updated connectivity map 820 has been generated for the geographic region 102. As part of the connectivity map update event 1130, data analyzer 406 may send, transmit, or otherwise provide the connectivity map 820 (as updated) to an external device (step 1012), such as an external process or logic, a UE 106, etc.

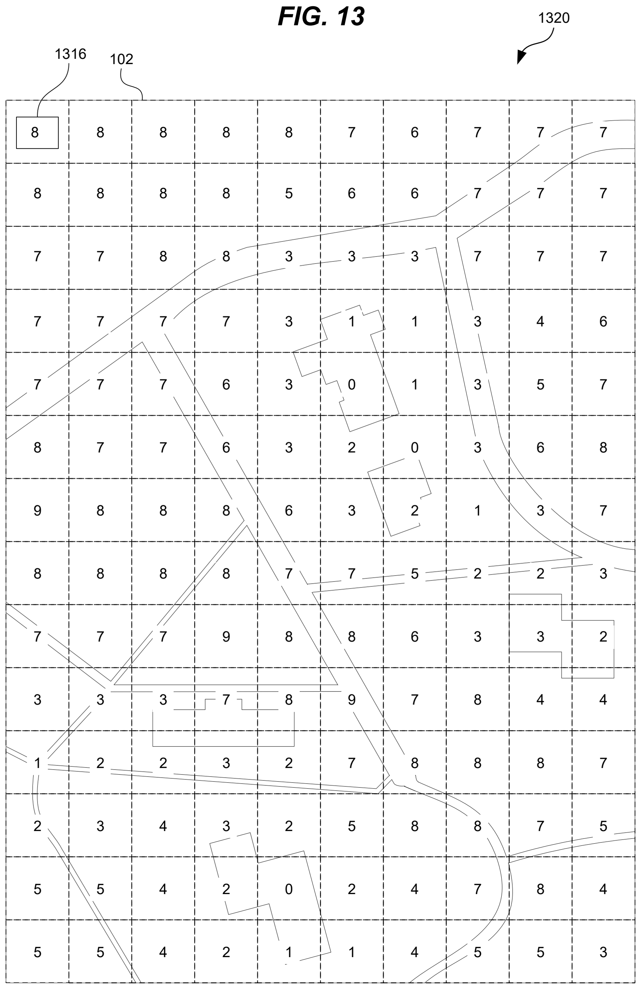

In an embodiment, the connectivity map 820 may comprise a connectivity numerical map. FIG. 13 illustrates a connectivity numerical map 1320 in an illustrative embodiment. In connectivity numerical map 1320, the connection quality value 302 assigned to each of the map sections 1122 is a numerical value 1316 within a numerical range. For example, the numerical values 1316 may be in the range of "0-9" as illustrated in FIG. 13. The value of "0" may indicate low connection quality at the location of a map section 1122, and the value of "9" may indicate high connection quality. The numerical values 1316 may refer to an absolute or relative scale. However, other numerical ranges are considered herein. For example, the numerical values 1316 may be in a probabilistic form, where the values "0-9" refer to levels of expected probability of success to fulfill mission objectives or user experience with respect to required connection quality service level.

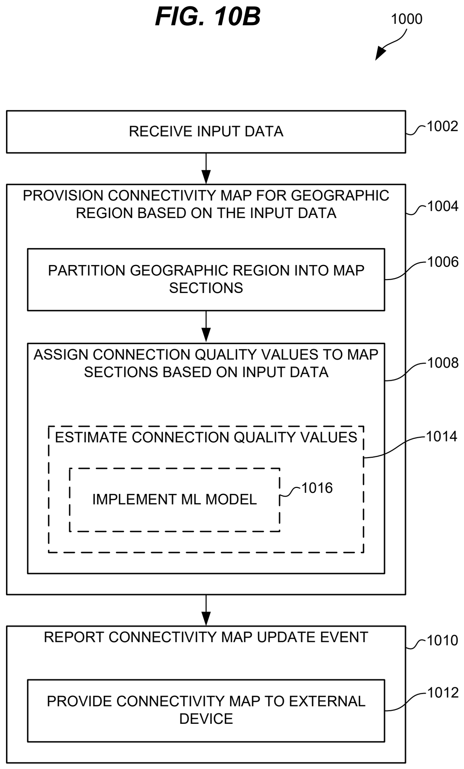

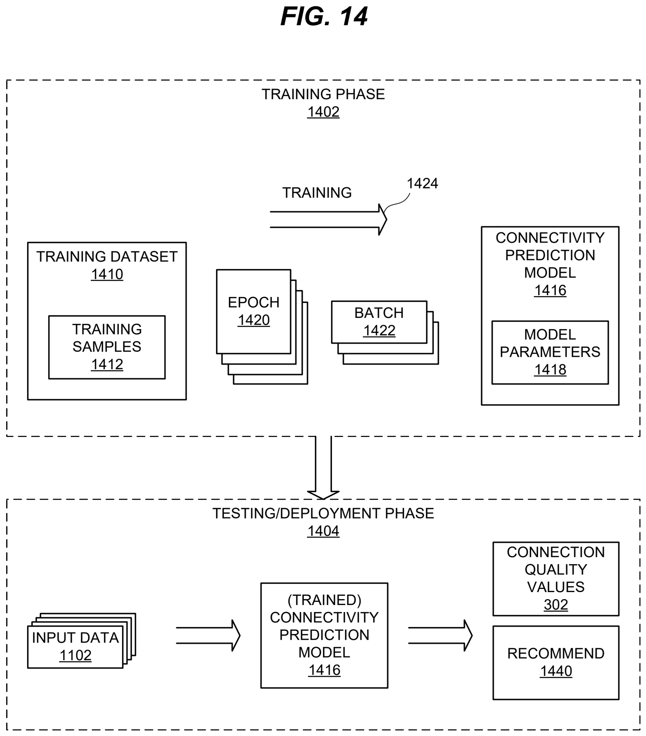

In an embodiment, data analyzer 406 may estimate or predict the connection quality values 302 of the map sections 1122 based on the input data 1102 (see optional step 1014 of FIG. 10B). To estimate or predict the connection quality values 302, data analyzer 406 may implement a ML system 410 or ML model 416 (optional step 1016). FIG. 14 is a schematic diagram of implementing an ML system 410 in an illustrative embodiment. ML system 410 may operate in a training phase 1402, and a testing or deployment phase 1404. In the training phase 1402, ML trainer 412, for example, operates to train a connectivity prediction model 1416, which is one example of an ML model 416 as illustrated in FIG. 4. ML trainer 412 performs training 1424 of the connectivity prediction model 1416 using training samples 1412 of a training dataset 1410. During training 1424, ML trainer 412 may train the connectivity prediction model 1416 over a plurality of epochs 1420, which is a single iteration of training on an entire training dataset. During an epoch 1420, the connectivity prediction model 1416 sequentially processes the training samples 1412 of the training dataset 1410, calculates loss or otherwise quantifies the predicted outputs, and updates model parameters 1418 (e.g., weights) accordingly. The number of epochs 1420 determines how many times the connectivity prediction model 1416 iterates through the entire training dataset 1410, allowing it to learn and refine the model parameters 1418 over multiple passes. Connectivity prediction model 1416 is trained, within an epoch 1420, in batches 1422 of training samples 1412 from the training dataset 1410. A batch 1422 is a number of training samples to work through before updating model parameters 1418.

In the testing/deployment phase 1404, ML manager 414, for example, may use the trained connectivity prediction model 1416 to predict connection quality values 302 for map sections 1122. For example, input data 1102 (or any subset thereof) may be fed or input into connectivity prediction model 1416 (as trained), and connectivity prediction model 1416 outputs predictions of connection quality values 302. Connectivity prediction model 1416 may also output confidence values associated with the predictions/recommendations. Connectivity prediction model 1416 may also output other predictions or recommendations 1440 as desired.

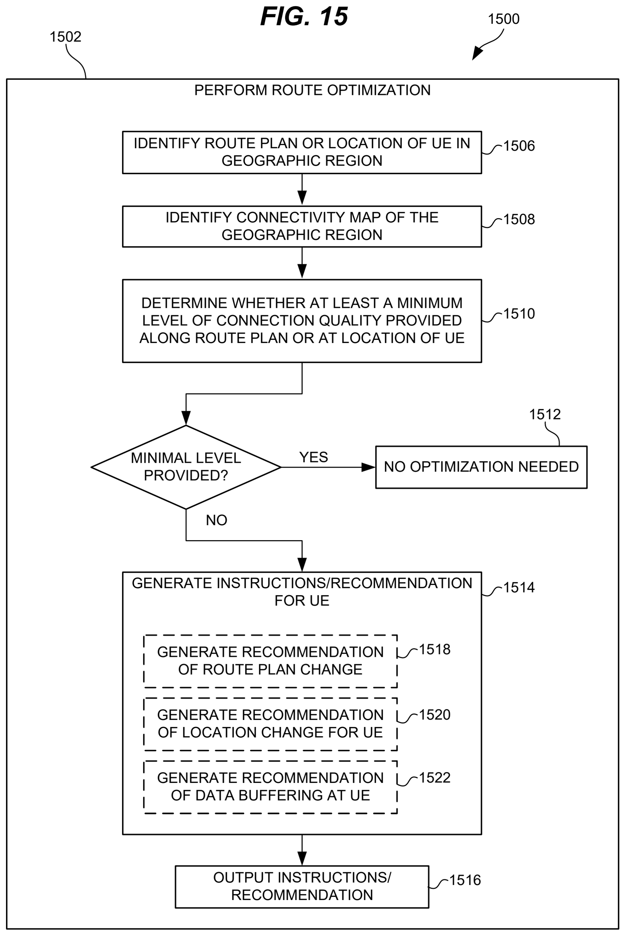

To provide instructions/recommendations to avoid service interruptions as described above (see step 708 of FIG. 7), connectivity manager 400 may perform a connectivity-based route optimization procedure based on a connectivity map 820 (or multiple connectivity maps 820). FIG. 15 is a flow chart illustrating a method 1500 of performing a connectivity-based route optimization procedure in an illustrative embodiment. The steps of method 1500 will be described with reference to connectivity manager 400 in FIG. 4, but those skilled in the art will appreciate that method 1500 may be performed in other systems or devices.

One assumption for this embodiment is that a UE 106 operates in a geographic region. The UE 106 may travel or move along a route, and the location/position of the UE 106 may change along the route between a starting point and a destination, for example. Alternatively, the UE 106 may be generally at a static location/position in the geographic region. Connectivity manager 400 may perform route optimization based on a connectivity map(s) 820 (step 1502), such that the connectivity of the UE 106 is above a minimum level. Route optimization may be initiated upon identifying a route plan for a UE 106, upon determining a position or location of the UE 106, etc. For route optimization, in an example, data analyzer 406 identifies a route plan or a location of the UE 106 in the geographic region 102 (step 1506). Data analyzer 406 also identifies a connectivity map 820 of the geographic region 102 (step 1508). Data analyzer 406 may generate the connectivity map 820 as described in FIG. 10A, and/or receive the connectivity map 820 from an external device.

Data analyzer 406 determines whether at least a minimum level of connection quality is provided along the route plan or at the location of the UE 106 (step 1510), based on connectivity map 820. In the route plan, the UE 106 may travel through one or more map sections 1122 of insufficient connection quality as indicated by the connectivity map 820. Insufficient connection quality may be defined by connection quality values 302 that are below a minimum connection quality threshold 304 (e.g., a numerical value 1316 of "3" or less). Further, the UE 106 may be located in a map section 1122 of insufficient connection quality.

When at least a minimum level of connection quality is provided along the route plan or at the location of the UE 106, data analyzer 406 does not need to perform optimization (step 1512). When at least a minimum level of connection quality is not provided along the route plan or at the location of the UE 106, data analyzer 406 generates an instruction or recommendation for the UE 106 to avoid service interruptions along the route plan or at the location (step 1514). Data analyzer 406 then transmits, provides, or outputs the instruction or recommendation to the UE 106, a user, an apparatus carrying the UE 106, etc. (step 1516).

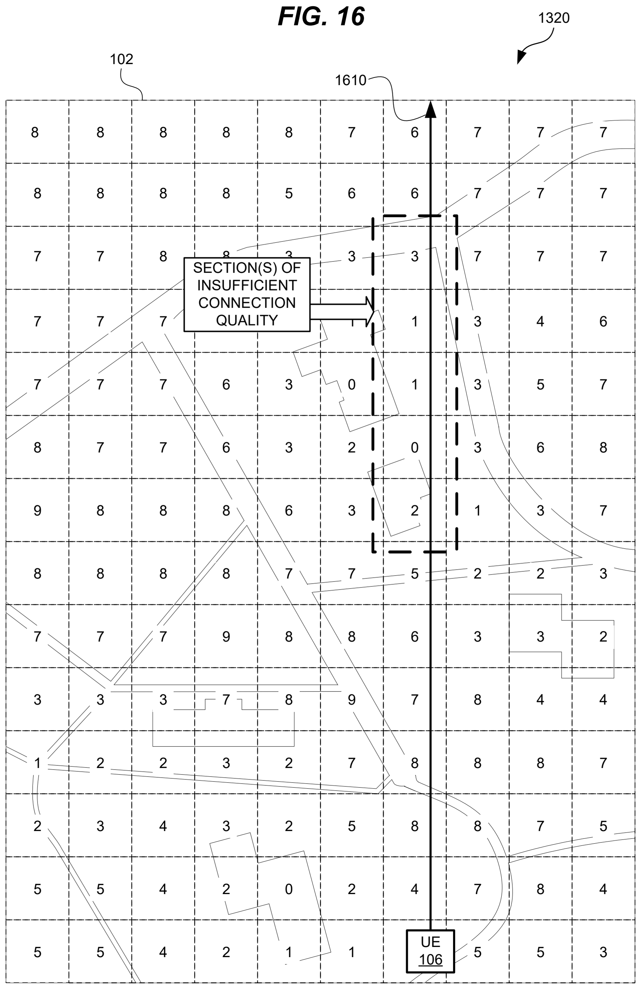

In an embodiment, data analyzer 406 may generate an instruction or recommendation to change or adjust the route plan (optional step 1518). FIG. 16 illustrates a route plan 1610 of the UE 106 in an illustrative embodiment. The route plan 1610 in FIG. 16 is overlaid on the connectivity numerical map 1320 of the geographic region 102, as an example. In the route plan 1610, the UE 106 may travel through one or more sections or areas of insufficient connection quality as indicated by the connectivity numerical map 1320 (i.e., map sections 1122 having numerical values 1316 of "3" or less). It may therefore be beneficial for the UE 106 to avoid traversing through the sections or areas of insufficient connection quality that are along the route plan 1610.

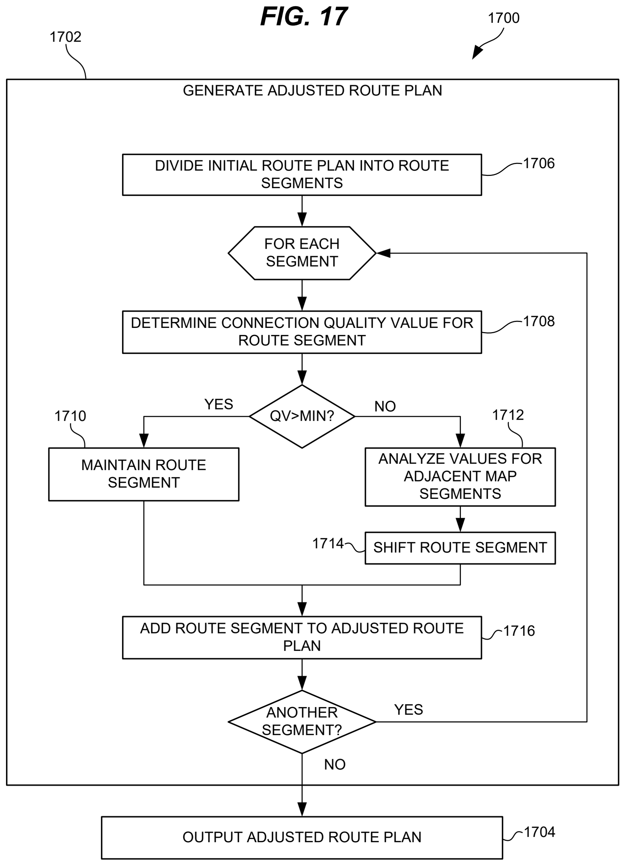

FIG. 17 is a flow chart illustrating a method 1700 of adjusting a route plan in an illustrative embodiment. The steps of method 1700 will be described with reference to connectivity manager 400 in FIG. 4, but those skilled in the art will appreciate that method 1700 may be performed in other systems or devices.

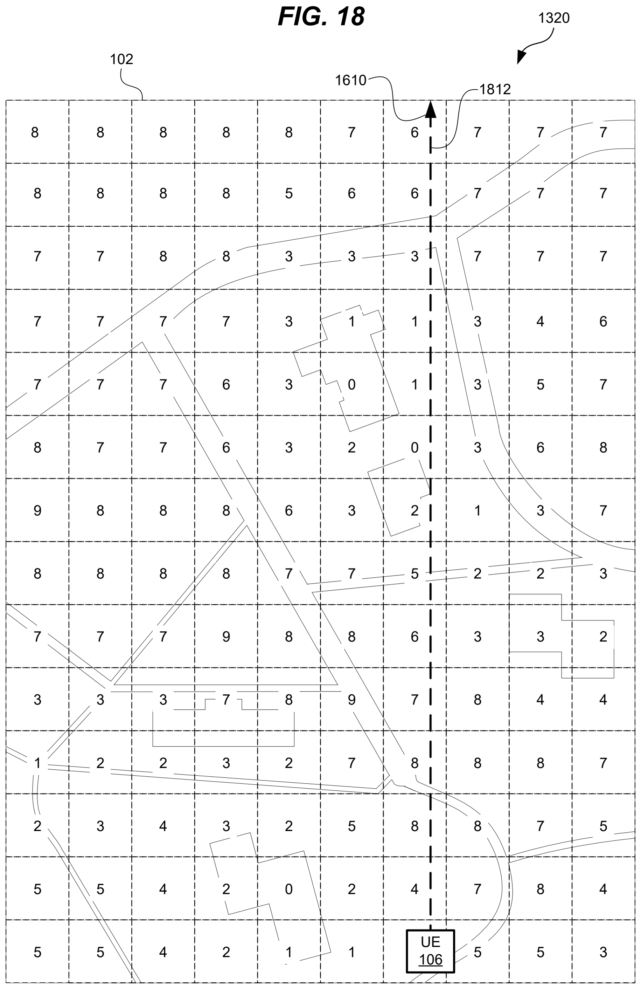

For method 1700, data analyzer 406 generates an optimized or adjusted route plan for the UE 106 (step 1702). To do so, data analyzer 406 identifies a route plan 1610 for the UE 106 (referred to as an initial route plan), and divides the route plan 1610 into a plurality of route segments (step 1706). For example, data analyzer 406 may acquire a flight plan for an AAV 632, a travel plan for an autonomous vehicle 636, an immersive experience plan for an XR device 622, or another type of route plan 1610, and divide the route plan 1610 into smaller portions referred to as route segments. FIG. 18 illustrates a route plan 1610 divided into route segments 1812 in an illustrative embodiment. Each of the route segments 1812 corresponds with a position or location in the geographic region 102, and therefore corresponds with a map section 1122 of the connectivity map 820 (e.g., connectivity numerical map 1320).

For each of the route segments 1812, data analyzer 406 determines a connection quality value 302 corresponding with the route segment 1812 based on the connectivity map 820 (step 1708 in FIG. 17). For example, when the route segments 1812 of the initial route plan 1610 are overlaid on the connectivity numerical map 1320, data analyzer 406 relates a connection quality value 302 to each of the route segments 1812. Data analyzer 406 then determines whether the connection quality value 302 is an acceptable, satisfactory, or compliant connectivity value, meaning that it is greater than a minimum connection quality threshold 304. When the connectivity numerical value 1316 of the route segment 1812 is greater than the minimum connection quality threshold 304, data analyzer 406 uses or maintains the route segment 1812 from the initial route plan 1610 (step 1710). Thus, the position or location of the route segment 1812 in the geographic region 102 does not change when the connection quality value 302 of the route segment 1812 is compliant. When the connection quality value 302 is less than or equal to the minimum connection quality threshold 304, data analyzer 406 analyzes the connection quality values 302 of neighboring or adjacent map sections 1122 (step 1712), and shifts or adjusts the route segment 1812 toward a neighboring or adjacent map section 1122 having a compliant connection quality value 302 (step 1714). For example, data analyzer 406 may compute a gradient between the connection quality value 302 of the map section 1122 corresponding with the route segment 1812, and the connection quality values 302 of neighboring or adjacent map sections 1122. Data analyzer 406 may then shift or adjust the route segment 1812 based on the computed gradient to a neighboring map section 1122 having a connection quality value 302 exceeding the minimum connection quality threshold 304. Data analyzer 406 then adds the route segment 1812 (shifted or not) to an adjusted route plan (step 1716). Data analyzer 406 repeats the above process for each of the route segments 1812 to generate the adjusted route plan for the UE 106. Data analyzer 406 then outputs an instruction or recommendation based on the adjusted route plan (step 1704).

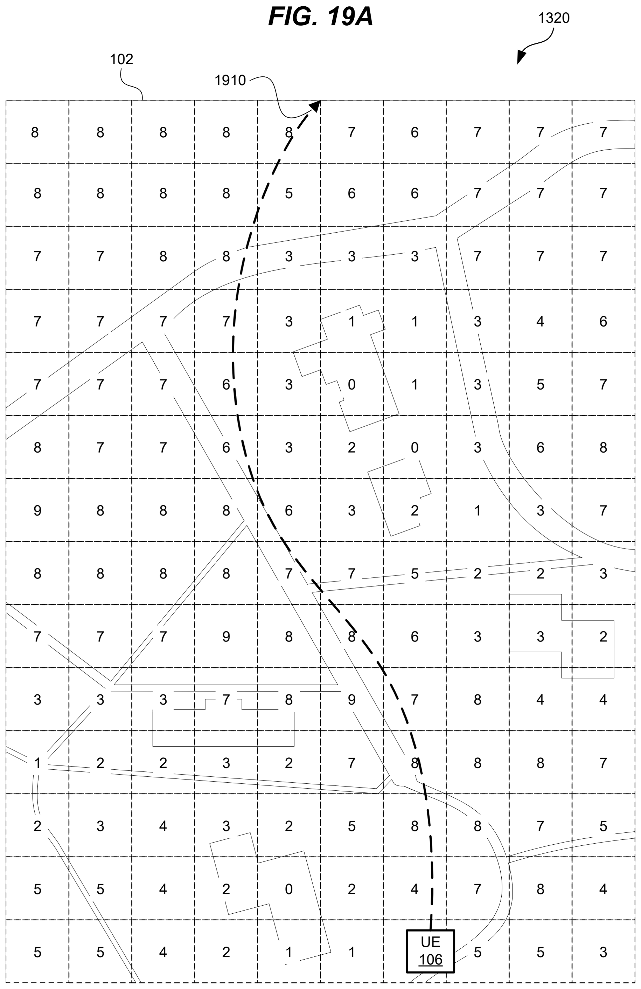

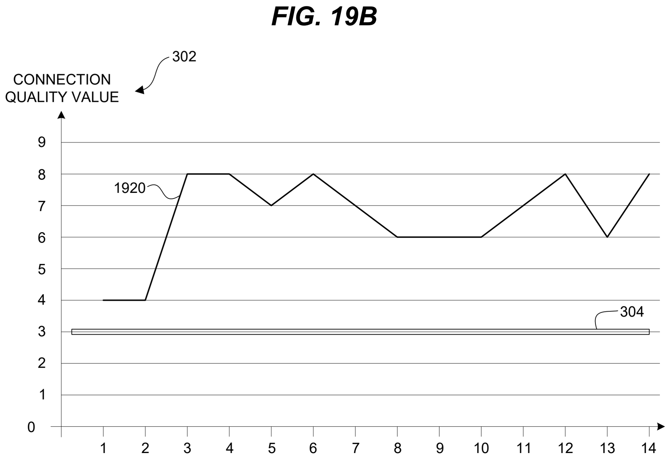

FIG. 19A illustrates an adjusted route plan 1910 in an illustrative embodiment. The adjusted route plan 1910 in FIG. 19A is overlaid on the connectivity numerical map 1320 of the geographic region 102. FIG. 19B illustrates connection quality over the adjusted route plan 1910 in an illustrative embodiment. The vertical axis in FIG. 19B indicates a connection quality value 302 (e.g., 0-9), while the horizontal axis is some unit of length. Line 1920 indicates the connection quality values 302 along adjusted route plan 1910 in FIG. 19A. If/when UE 106 traverses a route through the geographic region 102 based on the adjusted route plan 1910, the connection quality values 302 will stay above the minimum connection quality threshold 304 (see, for example, a value of "3" in FIG. 19B) along all points along the route. One technical benefit is the adjusted route plan 1910 avoids areas 910 having insufficient connection quality, which means the UE 106 is less likely to encounter service interruptions.

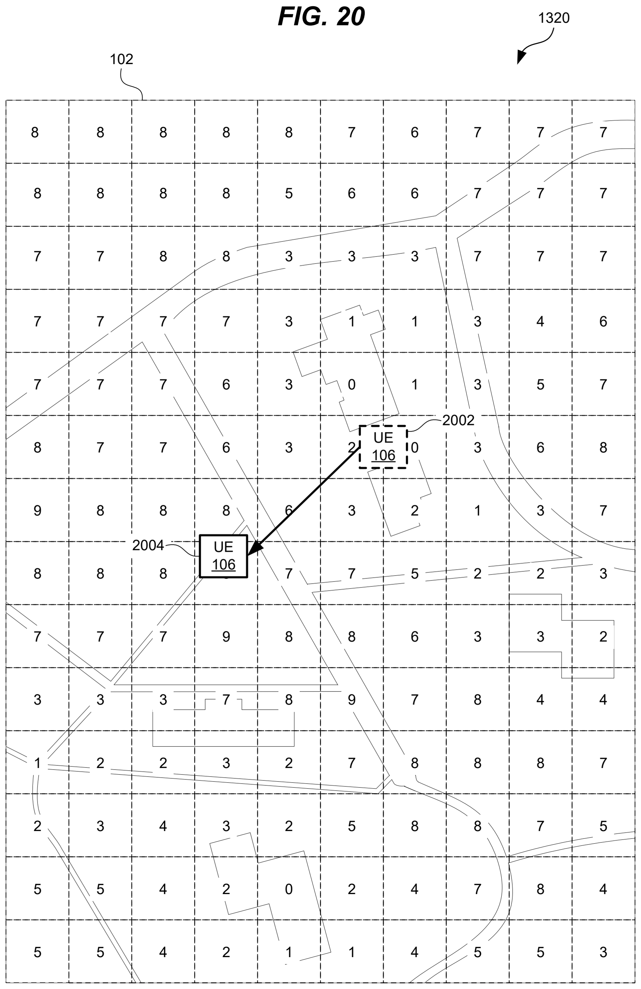

In FIG. 15, data analyzer 406 may generate an instruction or recommendation to change or alter the location of the UE 106 (optional step 1520). FIG. 20 illustrates a change in location of a UE 106 in an illustrative embodiment. In this example, the UE 106 is initially in a location (referred to as an initial location 2002) of insufficient connection quality as indicated by the connectivity numerical map 1320. Sufficient connection quality may be important for variety of applications and services hosted by UE 106, such as video streaming. When a UE 106 cannot provide required connection quality due radio interface limitations, services quality may be downgraded (e.g., to lower resolution) while the service itself is maintained. For some applications or services, downgraded service quality is undesired or is not an option as it may have impact on mission objectives or user experience. It may therefore be beneficial for the UE 106 to move out of the location of insufficient connection quality to access services or to continue accessing services. Thus, data analyzer 406 may generate an instruction or recommendation to move to a new location 2004 corresponding with a map section 1122 having at least a minimum level of connection quality. One technical benefit is a service interruption may be avoided.

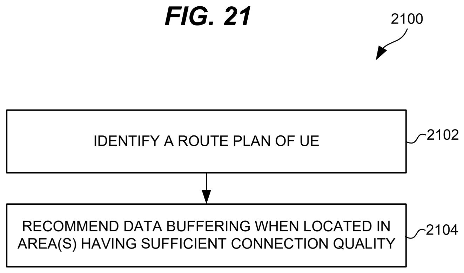

In FIG. 15, data analyzer 406 may generate an instruction or recommendation of data buffering at the UE 106 (optional step 1522). FIG. 21 is a flow chart illustrating a method 2100 of recommending data buffering in an illustrative embodiment. The steps of method 2100 will be described with reference to connectivity manager 400 in FIG. 4, but those skilled in the art will appreciate that method 2100 may be performed in other systems or devices.

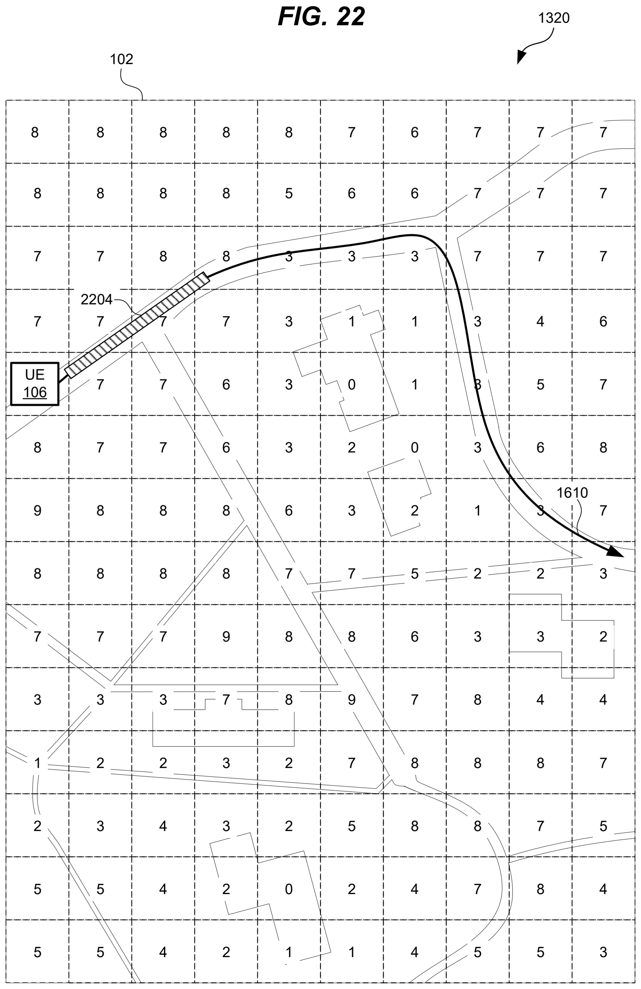

For method 2100, data analyzer 406 identifies a route plan 1610 for the UE 106 (step 2102). For example, data analyzer 406 may acquire a flight plan for an AAV 632, a travel plan for an autonomous vehicle 636, an immersive experience plan for an XR device 622, or another type of route plan 1610. FIG. 22 illustrates a route plan 1610 of a UE 106 in an illustrative embodiment. One or more of portions of the route plan 1610 pass through map sections 1122 having sufficient connection quality, and one or more of portions of the route plan 1610 pass through map sections 1122 having insufficient connection quality. Thus, data analyzer 406 recommends data buffering (e.g., of non-real-time data) by the UE 106 when the UE 106 is located in an area(s) having sufficient connection quality (step 2104 of FIG. 21). In FIG. 22, a portion 2204 of the route plan 1610 has sufficient connection quality, so data analyzer 406 recommends data buffering by the UE 106 at or along portion 2204 of the route plan 1610. One technical benefit is a service interruption may be avoided.

In an embodiment, connectivity manager 400 may perform a connectivity-based route reconfiguration procedure. The connectivity-based route reconfiguration procedure utilizes connectivity maps 820 for proper reaction to an observed or measured unexpected degradation of connection quality, such as to restore at least a minimal level of service if service is interrupted. Typically, unrecognized deficiencies in connection quality can happen if the given wireless standard is affected by significant events, such as interferences, jamming, power loss, etc.

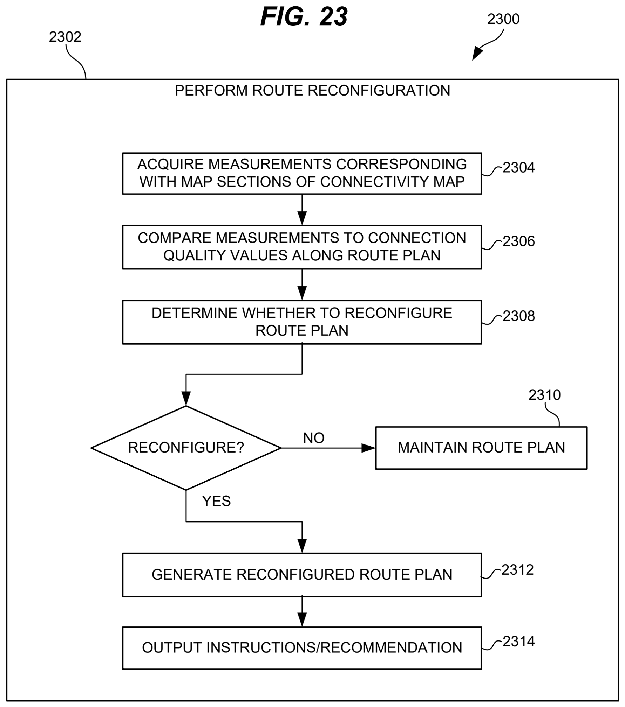

FIG. 23 is a flow chart illustrating a method 2300 of performing a connectivity-based route reconfiguration procedure in an illustrative embodiment. The steps of method 2300 will be described with reference to connectivity manager 400 in FIG. 4, but those skilled in the art will appreciate that method 2300 may be performed in other systems or devices.

One assumption for this embodiment is that a UE 106 travels or moves along a route within the geographic region 102, such as based on a route plan optimized as described above. Connectivity manager 400 may perform route reconfiguration, such as to react to an unexpected degradation of connection quality (step 2302). Data collector 404 receives, obtains, or acquires measurements corresponding with map sections 1122 of the connectivity map 820 (step 2304). For example, data collector 404 may query or subscribe to a RAN node 104, a network element/function of a core network, and/or other systems to receive actual measurements (also referred to as connectivity measurements) corresponding with map sections 1122 of the connectivity map 820. The measurements may comprise Channel State Information (CSI), mean Channel Quality Indicator (CQI), mean radio resources uplink and/or downlink utilization, mean Modulation and Coding Scheme, mean transmitter power, etc.

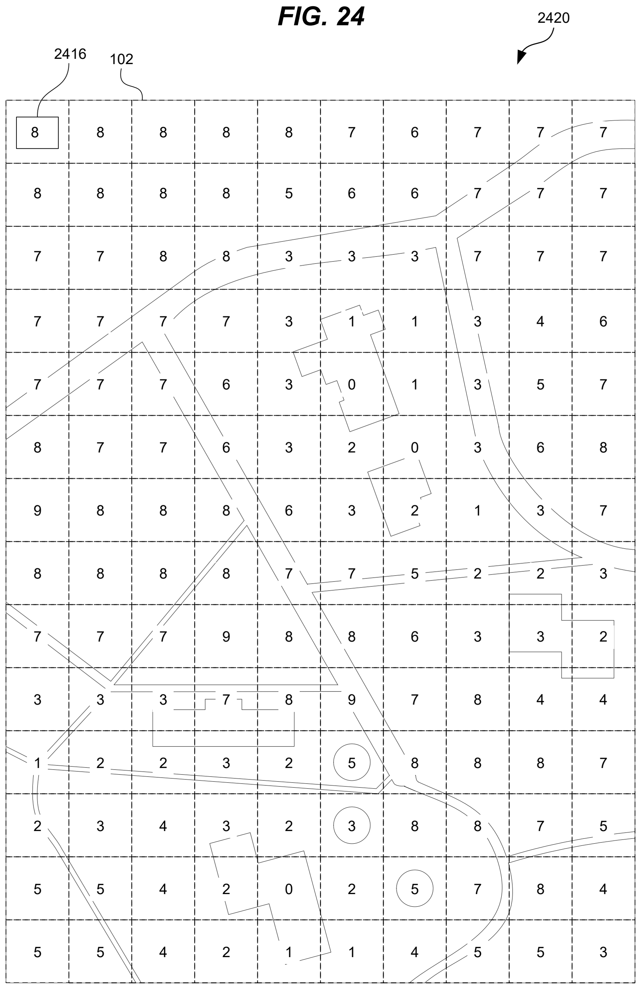

Data analyzer 406 compares the measurements with the connection quality values 302 assigned to the map sections 1122 along the route plan (step 2306). The comparison of actual measurements of performance/quality with the estimated connection quality values 302 may indicate an unexpected degradation of connection quality. For example, data analyzer 406 may generate another connectivity map that indicates actual connection quality values at different locations of the geographic region 102. More particularly, data analyzer 406 may determine actual connection quality values for each map section 1122 of the connectivity map based on the measurements. FIG. 24 illustrates a connectivity map 2420 of a geographic region 102 in an illustrative embodiment. The connectivity map 2420 (also referred to as a second connectivity map or actual connectivity map) includes actual connection quality values 2416 for each map section 1122 based on the measurements (e.g., real-time measurements by a UE 106, a RAN node, etc.). As indicated by the actual connection quality values 2416 circled in FIG. 24, some of the actual connection quality values 2416 may differ from the estimated connection quality values 302. Data analyzer 406 may therefore compare the estimated connection quality values 302 with the actual connection quality values 2416 to identify any reduction or degradation, or performance recovery or upgrade of connection quality in one or more of the map sections 1122.

In FIG. 23, data analyzer 406 determines whether to change or reconfigure the route plan of the UE 106 based at least on the comparison (step 2308). When the determination is to not reconfigure the route plan of the UE 106, data analyzer 406 maintains the present route plan (step 2310). When the determination is to reconfigure the route plan of the UE 106, data analyzer 406 generates a reconfigured route plan based on actual connection quality values 2416 determined for the map sections 1122 based on the measurements (step 2312). For example, data analyzer 406 may identify a map section 1122 in the connectivity map 2420 where connection quality is reduced by a threshold. Data analyzer 406 may search the connectivity map 2420 to identify a neighboring or adjacent map section 1122 having a compliant connection quality value 2416 with minimal deviation from the original route plan. For example, data analyzer 406 may compute a gradient between the actual connection quality value 2416 corresponding with the map section 1122, and the actual connection quality values 2416 of neighboring or adjacent map sections 1122. Data analyzer 406 may then shift or adjust route plan based on the computed gradient. Data analyzer 406 may perform similar operations for each map section 1122 along the original route plan to generate the reconfigured route plan.

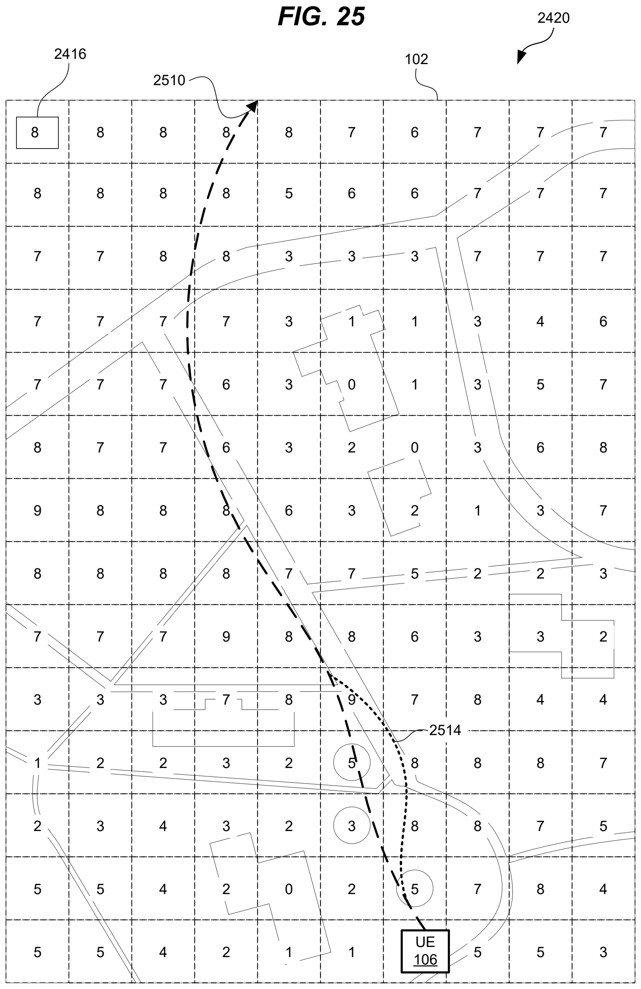

Data analyzer 406 then outputs an instruction or recommendation based on the reconfigured route plan (step 2314). FIG. 25 illustrates a reconfigured route plan 2514 in an illustrative embodiment. The original route plan 2510 in FIG. 25 is overlaid on a connectivity map 2420 (numerical map) of the geographic region 102. The reconfigured route plan 2514 veers from the original route plan 2510 to travel in areas of sufficient connection quality. One technical benefit is the reconfigured route plan 2514 avoids areas experiencing unexpected degradation of connection quality.

As the UE 106 travels along the reconfigured route plan 2514, data analyzer 406 may determine whether connection quality has been improved for the UE 106. When connection quality has been improved, data analyzer 406 may output an instruction or recommendation for the UE 106 to maintain the course along the reconfigured route plan 2514. When connection quality has not improved or has worsened, data analyzer 406 may take further action. For example, data analyzer 406 may initiate one or more predefined reaction plans for the UE 106. One predefined reaction plan may be for the UE 106 to return along the route plan in the opposite direction where connection quality values 302 were satisfied. Another predefined reaction plan may be for the UE 106 to return along a different route plan during which the UE 106 can measure connection quality values and assess the severity of the problem. Another predefined reaction plan may be for the UE 106 to initiate a travel toward a source of interferences or jamming in order to identify the source of the problem. It should be noted that if a jamming signal is considered, its intensity and location can be easily determined by sensing signal power. One technical benefit is the UE 106 is redirected even when experiencing unexpected degradation of connection quality.

The above embodiments may have multiple applications. One application may be related to drone or AAV 632 (UE) operations where mission objectives may require that proper connection quality be provided over an entire flight, which cannot be guaranteed due inequalities in connection quality. With help of the proposed procedures, a connectivity-optimized flight plan may be proposed and mechanisms for reactions on sudden unexpected connection quality issues can be applied. This way, mission objectives may be satisfied with a much higher level compared to an original flight plan.

Another application may be related to drone or AAV 632 (UE) operations in a full autonomous manner in the event of lost communication. Based on the proposed procedures, an AAV 632 may be able to successfully recover communications by following the provided guidance to an area where communications can be restored. Alternatively, an AAV 632 may be instructed to execute a predefined reaction plan, which can satisfy mission objectives.

Another application may be related to UE operations, which requires a significantly good connection quality for proper user experience. For example, XR cannot always be granted due to inequalities in connection quality service. Based on the proposed procedures, a user can be instructed to change his/her current location or position where connection quality is improved.

Another application may be related to UE efficient operation for optimal non-real-time data managing. Based on the proposed procedures, a UE 106 can anticipate or predict that the user/UE is approaching an area where connection quality is significantly below a required connection quality level. In such a case, the UE 106 can request additional non-real-time data buffering (e.g., if user/UE currently requires such non-real-time data services, such as for video streaming). The data can be uploaded or downloaded while the connection is still of good quality. Once the user/UE enters an area of poor connection quality, the UE 106 can use the buffered non-real time data for service continuity, while available radio resources can be used with priority for real-time data exchanging, as expected throughput can be lower. Therefore, inequalities in connection quality service can be compensated.

An overall benefit is that operations of a UE 106 occur in better connection quality conditions, which relate to actual user/UE position or location. This advantageously saves radio resource utilization, as a cell 110 can work with significantly higher efficiency (higher modulation scheme, lower Block Error Rate (BLER), lower transmission power, etc.). Thus, by relatively simple actions like changing a route, location, or position, significant improvement in connection quality can be granted.

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims and any equivalents thereof.

## Claims

1. An apparatus, comprising:
at least one processor; and
at least one memory storing instructions that, when executed by the at least one processor, cause the apparatus at least to perform:
identifying a geographic region of interest served by a radio access network;
provisioning an estimated connectivity map of the geographic region indicating estimated connection quality values at different locations of the geographic region;
determining one or more areas on the estimated connectivity map having insufficient connection quality based on the estimated connection quality values; and
providing a recommendation for user equipment to avoid service interruptions due to the one or more areas having insufficient connection quality.

2. The apparatus of claim 1, wherein the instructions, when executed by the at least one processor, cause the apparatus at least to perform:
performing a connectivity map update procedure by:
retrieving input data regarding wireless connectivity within the geographic region; and
provisioning the estimated connectivity map based on the input data by:
partitioning the geographic region into map sections; and
assigning an estimated connection quality value to each of the map sections based on the input data.

3. The apparatus of claim 2, wherein:
the estimated connectivity map comprises a connectivity numerical map in a grid format that partitions the geographic region into the map sections; and
the estimated connection quality values comprise numerical values within a numerical range.

4. The apparatus of claim 2, wherein:
the input data comprises one or more of:
coverage data for one or more cells in the geographic region;
weather forecast data for the geographic region;
log data regarding the geographic region;
radio resource control signaling data for the one or more cells;
radio resource utilization data for the geographic region; and
external update data comprising one or more estimated connectivity maps generated by external systems.

5. The apparatus of claim 2, wherein the instructions, when executed by the at least one processor, cause the apparatus at least to perform:
implementing machine learning to assign the estimated connection quality value to each of the map sections based on the input data.

6. The apparatus of claim 2, wherein the instructions, when executed by the at least one processor, cause the apparatus at least to perform:
performing a connectivity-based route optimization procedure based on the estimated connectivity map by:
identifying a route plan or a location of the user equipment in the geographic region;
determining, based on the estimated connectivity map, whether at least a minimum level of connection quality is provided along the route plan or at the location of the user equipment; and
generating, when at least a minimum level of connection quality is not provided along the route plan or at the location of the user equipment, a recommendation for the user equipment to avoid service interruptions along the route plan or at the location.

7. The apparatus of claim 6, wherein the instructions, when executed by the at least one processor, cause the apparatus at least to perform:
generating a recommendation to adjust the route plan by:
identifying an initial route plan of the user equipment;
dividing the initial route plan into a plurality of route segments;
for each route segment of the route segments:
determining the estimated connection quality value corresponding with the route segment based on the estimated connectivity map;
when the estimated connectivity quality value of the route segment is greater than a minimum connection quality threshold, maintaining the route segment from the initial route plan;
when the estimated connection quality value is less than or equal to the minimum connection quality threshold:
analyzing the estimated connection quality values of neighboring map sections; and
adjusting the route segment toward a neighboring map section having an estimated connection quality value exceeding the minimum connection quality threshold; and
adding the route segment to an adjusted route plan; and outputting the recommendation based on the adjusted route plan.

8. The apparatus of claim 6, wherein the instructions, when executed by the at least one processor, cause the apparatus at least to perform:
generating a recommendation to change the location of the user equipment.

9. The apparatus of claim 6, wherein the instructions, when executed by the at least one processor, cause the apparatus at least to perform:
generating a recommendation of data buffering at the user equipment by:
recommending data buffering of non-real-time data by the user equipment when the user equipment is located in one or more areas along the route plan having sufficient connection quality.

10. The apparatus of claim 6, wherein the instructions, when executed by the at least one processor, cause the apparatus at least to perform:
performing a connectivity-based route reconfiguration procedure by:
acquiring measurements corresponding with the map sections of the connectivity map;
comparing the measurements with the estimated connection quality values assigned to the map sections along the route plan of the user equipment;
determining whether to reconfigure the route plan of the user equipment based at least on the comparison; and
generating, when the determination is to reconfigure the route plan of the user equipment, a reconfigured route plan based on actual connection quality values determined for the map sections based on the measurements.

11. A method comprising:
identifying a geographic region of interest served by a radio access network;
provisioning an estimated connectivity map of the geographic region indicating estimated connection quality values at different locations of the geographic region;
determining one or more areas on the estimated connectivity map having insufficient connection quality based on the estimated connection quality values; and
providing a recommendation for user equipment to avoid service interruptions due to the one or more areas having insufficient connection quality.

12. The method of claim 11, wherein provisioning the estimated connectivity map comprises:
performing a connectivity map update procedure by:
retrieving input data regarding wireless connectivity within the geographic region; and
provisioning the estimated connectivity map based on the input data by:
partitioning the geographic region into map sections; and
assigning an estimated connection quality value to each of the map sections based on the input data.

13. The method of claim 12, wherein:
the estimated connectivity map comprises a connectivity numerical map in a grid format that partitions the geographic region into the map sections; and
the estimated connection quality values comprise numerical values within a numerical range.

14. The method of claim 12, wherein:
the input data comprises one or more of:
coverage data for one or more cells in the geographic region;
weather forecast data for the geographic region;
log data regarding the geographic region;
radio resource control signaling data for the one or more cells;
radio resource utilization data for the geographic region; and
external update data comprising one or more estimated connectivity maps generated by external systems.

15. The method of claim 12, further comprising:
performing a connectivity-based route optimization procedure based on the estimated connectivity map by:
identifying a route plan or a location of the user equipment in the geographic region;
determining, based on the estimated connectivity map, whether at least a minimum level of connection quality is provided along the route plan or at the location of the user equipment; and
generating, when at least a minimum level of connection quality is not provided along the route plan or at the location of the user equipment, a recommendation for the user equipment to avoid service interruptions along the route plan or at the location.
